# EUROPEAN PATENT SPECIFICATION

(11) **EP 3 756 920 B1**
(45) Date of publication and mention of the grant of the patent: **08.05.2024**
(21) Application number: 19758233.1
(22) Date of filing: 01.02.2019
(51) Int. Cl.: B60K 1/02, B60K 17/04, F16H 37/04, F16H 57/10, F16H 3/54

(54) **ELECTRIC VEHICLE AND DUAL-MOTOR PLANET GEAR POWER TRANSMISSION SYSTEM THEREOF**
ELEKTROFAHRZEUG UND ZWEIMOTORIGES PLANETENGETRIEBELEISTUNGSÜBERTRAGUNGSSYSTEM DAFÜR
VÉHICULE ÉLECTRIQUE ET SON SYSTÈME DE TRANSMISSION DE PUISSANCE À ENGRENAGE PLANÉTAIRE À DOUBLE MOTEUR

(30) Priority: 23.02.2018 CN 201810155678
(43) Date of publication of application: 30.12.2020
(73) Proprietor: Nio (Anhui) Holding Co., Ltd., Hefei, Anhui 230601 (CN)
(72) Inventor: KE, Feng, Shanghai 201804 (CN); SHI, Kai, Shanghai 201804 (CN); CHAI, Shaobiao, Shanghai 201804 (CN); LIU, Shunlong, Shanghai 201804 (CN)
(74) Representative: Patentwerk B.V.
(86) International application number: PCT/CN2019/074415
(87) International publication number: WO 2019/161738

(56) References cited:
- WO-A1-2017/160702
- CN-A- 1 603 153
- CN-A- 101 519 040
- CN-A- 102 848 908
- CN-A- 108 528 186
- CN-U- 206 600 423
- CN-U- 206 889 591
- DE-A1- 4 434 237
- DE-A1-102016 201 223
- DE-A1-102018 005 947
- US-B2- 7 866 432

## Description

### Technical Field

The invention belongs to the field of vehicles, and specifically provides an electric vehicle comprising a power transmission system with dual electric motors and planetary gears therefor.

### Background Art

At present, driving systems applicable to a single axle of an electric vehicle mainly include two solutions, i.e. single- motor driving and multi-motor driving. The single-motor driving means that the power output of a single electric motor is distributed to left and right axle shafts by a differential, and the left and right axle shafts then respectively transmit the power output to a wheel corresponding to each of the axle shafts, such that the two wheels rotate synchronously. Since neither of the two wheels can rotate independently, the driving torque of each of the wheels cannot be separately adjusted such that the vehicle cannot obtain a good operating performance.

The multi-motor driving solution means that each of the wheels is separately provided with a hub motor such that each of the wheels can rotate separately and obtain the required driving torque thereof. Since the hub motor cannot be matched to a speed reducer, the rotational speed of the wheel depends only on the range of rotational speeds of the hub motor, and a large torque output is impossible. Moreover, the hub motor connected to the wheel is arranged below a shock-absorbing spring of the vehicle, and belongs to unsprung mass. An excessive increase in the unsprung mass will increase an inertial force when the wheel is running over an uneven ground to cause a relatively large impact to the vehicle itself, thereby affecting the driving comfort of the vehicle and lowering the driving reliability of the vehicle.

German DE4434237A1 discloses a power transmission system with dual electric motors and planetary gears for a vehicle, the power transmission system comprising two power transmission subsystem; each power transmission subsystem comprising an electric motor and a speed reducer, wherein the speed reducer comprises a first reduction mechanism and a second reduction mechanism, the first reduction mechanism has an input end connected to an output shaft of the electric motor, the first reduction mechanism has an output end connected to an input end of the second reduction mechanism, and the second reduction mechanism has an output end connected to an axle shaft of the vehicle, whereby the second reduction mechanism comprises a planetary gear reduction mechanism, whereby the planetary gear reduction mechanism comprises a housing, and a ring gear, planetary gears and a sun gear which are arranged inside the housing in sequence from the outside to the inside, wherein the sun gear is connected via gear 40 to the output end of the first reduction mechanism; the planetary gears are respectively engaged with the sun gear and the ring gear, and are connected to the axle shaft via a planet carrier; and the ring gear is connected to the housing, whereby the power transmission system comprises two identical power transmission subsystems, and the two power transmission subsystems are arranged symmetrically.

WO 2017/160702 A1 discloses an electric vehicle, comprising a power transmission system with dual electric motors and planetary gears, the power transmission system comprises two identical power transmission subsystems, wherein the two power transmission subsystems are arranged symmetrically; each of the two power transmission subsystems comprising an electric motor and a speed reducer, wherein the speed reducer comprises a first reduction mechanism and a second reduction mechanism, the first reduction mechanism has an input end connected to an output shaft of the electric motor, the first reduction mechanism has an output end connected to an input end of the second reduction mechanism, and the second reduction mechanism has an output end connected to an axle shaft of the electric vehicle; whereby the electric motor and the speed reducer are both arranged on a subframe of the electric vehicle, wherein said subframe is positioned above a shock-absorbing spring of the vehicle such that the subframe forms part of the sprung mass of the vehicle.

DE 10 2016 201223 A1 discloses a power transmission system with an electric motor and planetary gears for an electric vehicle, the power transmission system comprises a power transmission subsystem; the two power transmission subsystem comprising an electric motor and a speed reducer, wherein the speed reducer comprises a reduction mechanism, the reduction mechanism has an input end connected to an output shaft of the electric motor, and the reduction mechanism has an output end; the reduction mechanism comprises a planetary gear reduction mechanism, the planetary gear reduction mechanism comprises a housing, and a ring gear, planetary gears and a sun gear which are arranged inside the housing in sequence from the outside to the inside, wherein the planetary gears are respectively engaged with the sun gear and the ring gear, and are connected to the output end via a planet carrier; and the ring gear is connected to the housing; whereby the planetary gear reduction mechanism further comprises a ring gear lock arranged on the housing; when the ring gear lock is locked, the ring gear is circumferentially fixed to the housing via the ring gear lock; and when the ring gear lock is unlocked, the ring gear is capable of rotating about its own axis. $

Correspondingly, there is a need for a novel power transmission system in the art to solve the problems described above.

### Summary of the invention

To solve the problems in the prior art, that is, to solve at least one of the problem of wheels of an electric vehicle that are driven by a plurality of hub motors failing to output relatively large torque via a speed reducer and the problem of the driving toques of wheels of an electric vehicle that are driven by a single motor failing to be separately adjusted, the invention provides an electric vehicle comprising a power transmission system with dual electric motors and planetary gears for an electric vehicle as defined in independent claim 1 and its dependent claims 2-6.

### Brief Description of the Drawings

Preferable embodiments of the invention are described below with reference to the accompanying drawings and in conjunction with a battery electric vehicle. In the accompanying drawings:
Fig. 1 shows a schematic structural diagram of a power transmission system with dual electric motors and planetary gears according to the invention;
Fig.2 is a schematic diagram of a speed reducer according to the invention; and
Fig. 3 is a schematic diagram of the internal structure of the speed reducer according to the invention.

List of reference numerals:
100. integrated speed reducer; 110. Speed reducer housing; 120. First speed reducer; 121. First input shaft; 122. First input gear; 123. First output gear; 124. First intermediate reversing gear; 125. First sun gear; 126. First planetary gear; 127. First planet carrier; 128. First ring gear; 129. First ring gear lock; 130. Second speed reducer; 131. Second input shaft; 132. Second input gear; 133. Second output gear; 134. Second intermediate reversing gear; 135. Second sun gear; 136. Second planetary gear; 137. Second planet carrier; 138. Second ring gear; 139. Second ring gear lock; 210. First electric motor; 220. Second electric motor; 300. First axle shaft; 400. Second axle shaft.

### Detailed Description of Embodiments

It should be understood by those skilled in the art that embodiments in this section are merely used to explain the technical principle of the invention and are not intended to limit the scope of protection of the invention. For example, although the power transmission system with dual electric motors and planetary gears of the invention is described in conjunction with a battery electric vehicle, the power transmission system with dual electric motors and planetary gears of the invention may also be applied to oil-electric hybrid vehicles and gas-electric hybrid vehicles.

It should be noted that the terms herein that indicate the direction or positional relationship, such as "centre", "upper", "lower", "left", "right", "vertical", "horizontal", "inner" and "outer", are based on the direction or positional relationship shown in the figures, which is merely for ease of description and not to indicate or imply that the device or element must have a particular orientation and be constructed and operated in a particular orientation, and therefore, should not be construed as limiting the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

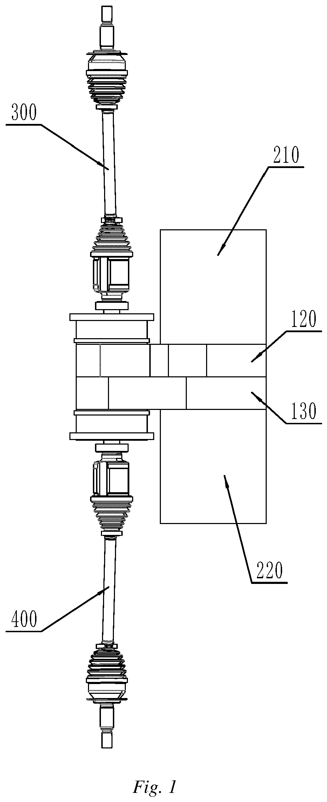

As shown in Fig. 1, a power transmission system with dual electric motors and planetary gears for an electric vehicle of a preferable technical solution for carrying out the invention mainly comprises a first power transmission subsystem (not labelled in the figure) and a second power transmission subsystem (not labelled in the figure) which are identical. The power transmission subsystem mainly comprises a first speed reducer 120 and a first electric motor 210. The first speed reducer 120 has an input end connected to an output shaft of the first electric motor 210, and the first speed reducer 120 has an output end connected to a wheel of an electric vehicle via a first axle shaft 300. The second power transmission subsystem mainly comprises a second speed reducer 130 and a second electric motor 220. The second speed reducer 130 has an input end connected to an output shaft of the second electric motor 220, and the second speed reducer 130 has an output end connected to another wheel of the electric vehicle via a second axle shaft 400.

Further, although not shown in the figure, the first speed reducer 120, the second speed reducer 130, the first electric motor 210 and the second electric motor 220 are all arranged on a subframe of the electric vehicle such that the first speed reducer 120, the second speed reducer 130, the first electric motor 210 and the second electric motor 220 are all positioned above a shock-absorbing spring of the electric vehicle. Compared to the prior art where a hub motor is arranged below the shock-absorbing spring of the electric vehicle, the power transmission system with dual electric motors and planetary gears of the invention lowers the unsprung mass of the electric vehicle when applied thereto, so as to reduce the inertial force when the wheel is running over the uneven ground, thereby reducing the impact of the uneven ground on the vehicle body and enhancing the driving comfort of the electric vehicle.

In a preferable solution for carrying out the invention, the first power transmission subsystem and the second power transmission subsystem are identical. However, those skilled in the art can make appropriate adjustments on the first power transmission subsystem and the second power transmission subsystem according to requirements, for example, appropriate adjustments on the shapes and structures of the first speed reducer 120 and the second speed reducer 130.

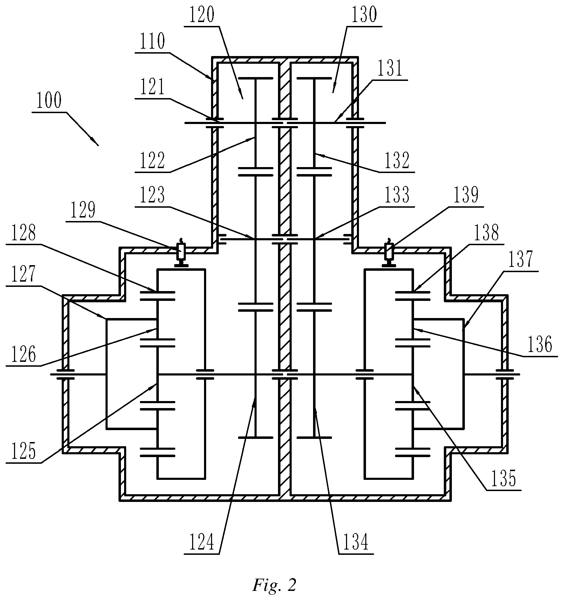

As shown in Figs. 1 and 2, the first speed reducer 120 and the second speed reducer 130 are preferably provided as an integrated speed reducer 100 such that the whole speed reducer has a more compact structure so as to reduce the space occupied by the whole speed reducer.

Preferably, as shown in Fig. 2, the first speed reducer 120 and the second speed reducer 130 are symmetrically provided inside a speed reducer housing 110.

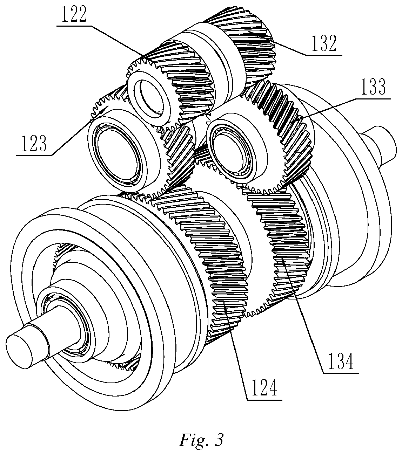

As shown in Figs. 2 and 3, the first speed reducer 120 of the invention mainly comprises a first reduction mechanism (not labelled in the figure) and a second reduction mechanism (not labelled in the figure). The first reduction mechanism is a single-stage cylindrical gear reduction mechanism, which mainly comprises a first input shaft 121, a first input gear 122 and a first output gear 123. The first input shaft 121 is pivotally provided on the speed reducer housing 110, and is also coaxially fixed to the first input gear 122, and the first input gear 122 and the first output gear 123 are engaged with each other. The second reduction mechanism is a planetary gear reduction mechanism, which mainly comprises a first intermediate reversing gear 124, a first sun gear 125, first planetary gears 126, a first planet carrier 127 and a first ring gear 128. The first intermediate reversing gear 124 is engaged with the first output gear 123, and is also coaxially fixed to the first sun gear 125. The first ring gear 128 is connected to the first sun gear 125 via the first planetary gears 126, and the first planetary gears 126 are then pivotally connected to the first planet carrier 127, respectively.

With continued reference to Fig. 2, the first speed reducer 120 further comprises a first ring gear lock 129 provided on the speed reducer housing 110, and the first ring gear lock 129 is used to circumferentially fix the first ring gear 128. Specifically, when a bolt of the first ring gear lock 129 extends out, an end portion of the bolt can abut against and be tightly compressed against an outer side of the first ring gear 128 such that the first gear ring 128 is circumferentially fixed. When the bolt of the first ring gear lock 129 retracts back, the end portion of the bolt is separated from the outer side of the first ring gear 128 such that the first gear ring 128 can rotate freely. Those skilled in the art can understand that the locking between the bolt of the first ring gear lock 129 and the first ring gear 128 may be in any feasible way, for example, the locking by means of a friction force and by inserting the end portion of the bolt into a lock groove provided on the outer side of the first ring gear 128.

In a preferable technical solution of the invention, the first ring gear lock 129 is an electrically controlled lock such that a controller of the electric vehicle can control the telescoping movement of the bolt of the first ring gear 129.

In addition, although not shown in the figures, the second reduction mechanism of the invention may be further provided with a separate housing for accommodating the first sun gear 125, the first planetary gears 126, the first planet carrier 127 and the first ring gear 128. In this case, the first ring gear lock 129 is provided on this housing.

The power transmission process of the first speed reducer 120 is described below in conjunction with Fig. 2.

As shown in Fig. 2, when the first electric motor 210 drives the wheel of the electric vehicle to rotate, the first ring gear lock 129 locks the first ring gear 128 to prevent the first ring gear 128 from rotating. The output shaft of the first electric motor 210 is coaxially fixed to the first input shaft 121, and drives the first input gear 122 to rotate via the first input shaft 121. The rotating first input gear 122 drives the first output gear 123 to rotate by means of the engaged connection of the first input gear and the first output gear 123. The rotating first output gear 123 drives the first sun gear 125 to rotate by means of the engaged connection of the first output gear and the first intermediate reversing gear 124. Since the first ring gear 128 is locked, the rotating first sun gear 125 drives the first planetary gears 126 to rotate in an opposite direction by means of the engaged connection of the first sun gear and the first planetary gears 126. The rotating first planetary gears 126 drive the first planet carrier 127 to rotate. The rotating first planet carrier 127 drives the wheel to rotate via the first axle shaft 300 which is connected to the left end of the first planet carrier 127 as shown in Fig. 2.

When the first electric motor 210 malfunctions and cannot supply power to the first speed reducer 120, the controller of the electric vehicle unlocks the first ring gear lock 129 to release the first ring gear 128, such that the first ring gear 128 can rotate freely. In this case, the first sun gear 125 cannot drive the first planet carrier 127 to rotate by means of the first ring gear 128 and the first planetary gears 126. The power transmission between the first electric motor 210 in driving connection with the first sun gear 125 and the wheel in driving connection with the first planet carrier 127 is therefore interrupted, such that the wheel can rotate freely, thereby eliminating the resistance applied by the malfunctioned first electric motor 210 to the electric vehicle when the electric vehicle is running.

It should be noted that the power transmission relationship between the first sun gear 125, the first planetary gears 126, the first planet carrier 127 and the first ring gear 128 when the first ring gear lock 129 is unlocked is not described in detail here because the working principle of the planetary speed reducer is known by those skilled in the art.

With continued reference to Figs. 2 and 3, the second speed reducer 130 of the invention mainly comprises a third reduction mechanism (not labelled in the figures) symmetric to the first reduction mechanism and a fourth reduction mechanism (not labelled in the figures) symmetric to the second reduction mechanism. The third reduction mechanism is a single-stage cylindrical gear reduction mechanism, which mainly comprises a second input shaft 131, a second input gear 132 and a second output gear 133. The second input shaft 131 is pivotally provided on the speed reducer housing 110, and is also coaxially fixed to the second input gear 132, and the second input gear 132 and the second output gear 133 are engaged with each other. The fourth reduction mechanism is a planetary gear reduction mechanism, which mainly comprises a second intermediate reversing gear 134, a second sun gear 135, second planetary gears 136, a second planet carrier 137 and a second ring gear 138. The second intermediate reversing gear 134 is engaged with the second output gear 133, and is also coaxially fixed to the second sun gear 135. The second ring gear 138 is connected to the second sun gear 135 via the second planetary gears 136, and the second planetary gears 136 are then pivotally connected to the second planet carrier 137, respectively.

With continued reference to Fig. 2, the second speed reducer 130 further comprises a second ring gear lock 139 provided on the speed reducer housing 110, and the second ring gear lock 139 is used to circumferentially fix the second ring gear 138. Specifically, when a bolt of the second ring gear lock 139 extends out, an end portion of the bolt can abut against and be tightly compressed against an outer side of the second ring gear 138 such that the second gear ring 138 is circumferentially fixed. When the bolt of the second ring gear lock 139 retracts back, the end portion of the bolt is separated from the outer side of the second ring gear 138 such that the second gear ring 138 can rotate freely. Those skilled in the art can understand that the locking between the bolt of the second ring gear lock 139 and the second ring gear 138 may be in any feasible way, for example, the locking by means of a friction force and by inserting the end portion of the bolt into a lock groove provided on the outer side of the second ring gear 138.

In a preferable technical solution of the invention, the second ring gear lock 139 is an electrically controlled lock such that a controller of the electric vehicle can control the telescoping movement of the bolt of the second ring gear 139.

In addition, although not shown in the figures, the second reduction mechanism of the invention may be further provided with a separate housing for accommodating the second sun gear 135, the second planetary gears 136, the second planet carrier 137 and the second ring gear 138. In this case, the second ring gear lock 139 is provided on this housing.

The power transmission process of the second speed reducer 130 is described below in conjunction with Fig. 2.

As shown in Fig. 2, when the second electric motor 220 drives the wheel of the electric vehicle to rotate, the second ring gear lock 139 locks the second ring gear 138 to prevent the second ring gear 138 from rotating. The output shaft of the second electric motor 220 is coaxially fixed to the second input shaft 131, and drives the second input gear 132 to rotate via the second input shaft 131. The rotating second input gear 132 drives the second output gear 133 to rotate by means of the engaged connection of the second input gear and the second output gear 133. The rotating second output gear 133 drives the second sun gear 135 to rotate by means of the engaged connection of the second output gear and the second intermediate reversing gear 134. Since the second ring gear 138 is locked, the rotating second sun gear 135 drives the second planetary gears 136 to rotate in an opposite direction by means of the engaged connection of the second sun gear and the second planetary gears 136. The rotating second planetary gears 136 drive the second planet carrier 137 to rotate. The rotating second planet carrier 137 drives the wheel to rotate via the second axle shaft 400 which is connected to the left end of the second planet carrier 137 as shown in Fig. 2.

When the second electric motor 220 malfunctions and cannot supply power to the second speed reducer 130, the controller of the electric vehicle unlocks the second ring gear lock 139 to release the second ring gear 138, such that the second ring gear 138 can rotate freely. In this case, the second sun gear 135 cannot drive the second planet carrier 137 to rotate by means of the second ring gear 138 and the second planetary gears 136. The power transmission between the second electric motor 220 in driving connection with the second sun gear 135 and the wheel in driving connection with the second planet carrier 137 is therefore interrupted, such that the wheel can rotate freely, thereby eliminating the resistance applied by the malfunctioned second electric motor 220 to the electric vehicle when the electric vehicle is running.

It should be noted that the power transmission relationship between the second sun gear 135, the second planetary gears 136, the second planet carrier 137 and the second ring gear 138 when the second ring gear lock 139 is unlocked is not described in detail here because the working principle of the planetary speed reducer is known by those skilled in the art.

Those skilled in the art can understand that, when applied to the electric vehicle, the power transmission system with dual electric motors and planetary gears of the invention can ensure that, during the normal running of the electric vehicle, and when a certain power motor (the first electric motor 210 or the second electric motor 220) malfunctions, unlocking the ring gear (the first ring gear 128 or the second ring gear 138) from the ring gear lock (the first ring gear lock 129 or the second ring gear lock 139) can interrupt the power connection between the power motor and the corresponding wheel. In this way, it is ensured that the malfunctioned power motor does not apply resistance to the running electric vehicle, and the running resistance to the vehicle is thus reduced.

Those skilled in the art can also understand that the power transmission system with dual electric motors and planetary gears of the invention can not only be applied to battery electric vehicles to allow the battery electric vehicles to have front-wheel drive, rear-wheel drive or four-wheel drive power output, but also be applied to oil-electric hybrid vehicles and gas-electric hybrid vehicles.

Further, in a preferable embodiment of the invention, the first electric motor 210 and the second electric motor 220 are two permanent magnet synchronous motors which are identical in structure and performance. Alternatively, those skilled in the art can replace the first electric motor 210 and the second electric motor 220 described above by electric motors in any other form such as servo motors according to requirements.

In summary, the power transmission system with dual electric motors and planetary gears of the invention can allow each of the driving wheels of the electric vehicle to be respectively driven by a separate electric motor so as to effectively control the output torque of each of the wheels; moreover, the configuration of the single-stage cylindrical gear reduction mechanism and the planetary gear reduction mechanisms can also enable the speed reducer 100 to have a relatively high reduction ratio while having a compact layout space, such that the electric vehicle can obtain a higher low-speed performance.

Heretofore, the technical solutions of the invention have been described with reference to the preferred embodiments shown in the accompanying drawings; however, those skilled in the art can readily understand that the scope of protection of the invention, as defined in the claims, is obviously not limited to these particular embodiments.

## Claims

1. An electric vehicle, comprising a power transmission system with dual electric motors and planetary gears, the power transmission system comprises two identical power transmission subsystems, wherein the two power transmission subsystems are arranged symmetrically;
each of the two power transmission subsystems comprising an electric motor (210, 220) and a speed reducer (120, 130),
wherein the speed reducer comprises a first reduction mechanism and a second reduction mechanism,
the first reduction mechanism has an input end connected to an output shaft of the electric motor, the first reduction mechanism has an output end connected to an input end of the second reduction mechanism, and the second reduction mechanism has an output end connected to an axle shaft of the electric vehicle;
the second reduction mechanism comprises a planetary gear reduction mechanism, the planetary gear reduction mechanism comprises a housing, and a ring gear (128), planetary gears (126) and a sun gear (125) which are arranged inside the housing in sequence from the outside to the inside,
wherein the sun gear (125) is connected to the output end of the first reduction mechanism;
the planetary gears (126) are respectively engaged with the sun gear (125) and the ring gear (128), and are connected to the axle shaft via a planet carrier; and
the ring gear (128) is connected to the housing;
whereby
the electric motor (210, 220) and the speed reducer (120, 130) are both arranged on a subframe of the electric vehicle, wherein said subframe is positioned above a shock-absorbing spring of the vehicle such that the subframe forms part of the sprung mass of the vehicle;
the planetary gear reduction mechanism further comprises a ring gear lock (129) arranged on the housing;
when the ring gear lock (129) is locked, the ring gear (128) is circumferentially fixed to the housing via the ring gear lock (129); and
when the ring gear lock (129) is unlocked, the ring gear (128) is capable of rotating about its own axis.

2. The electric vehicle according to claim 1, **characterized in that** the first reduction mechanism is a single-stage cylindrical gear reduction mechanism.

3. The electric vehicle according to claim 2, **characterized in that** the single-stage cylindrical gear reduction mechanism comprises a first input gear (122) and a first output gear (123) which are engaged with each other,
wherein the first input gear (122) is in driving connection with the output shaft of the electric motor,
and the first output gear (123) is in driving connection with the input end of the second reduction mechanism.

4. The electric vehicle according to claim 3, **characterized in that** the singe-stage cylindrical gear reduction mechanism further comprises a first input shaft (121) coaxially fixed to the first input gear (122), and the first input shaft (121) is coaxially fixed and connected to the output shaft of the electric motor.

5. The electric vehicle according to claim 1, **characterized in that** the ring gear lock (129) is an electrically controlled lock.

6. The electric vehicle according to claim 1, **characterized in that** the planetary gear reduction mechanism further comprises an intermediate reversing gear (124) coaxially fixed to the sun gear (125), and the sun gear (125) is connected to the output end of the first reduction mechanism via the intermediate reversing gear (124).

## Patentansprüche

1. Elektrofahrzeug, umfassend ein Leistungsübertragungssystem mit zwei Elektromotoren und Planetengetrieben, wobei das Leistungsübertragungssystem zwei identische Leistungsübertragungsteilsysteme umfasst, wobei die zwei Leistungsübertragungsteilsysteme symmetrisch angeordnet sind;
wobei jedes der zwei Leistungsübertragungsteilsysteme einen Elektromotor (210, 220) und einen Drehzahlverminderer (120, 130) umfasst,
wobei der Drehzahlverminderer einen ersten Untersetzungsmechanismus und einen zweiten Untersetzungsmechanismus umfasst,
wobei der erste Untersetzungsmechanismus ein Eingangsende aufweist, das mit einer Ausgangswelle des Elektromotors verbunden ist, wobei der erste Untersetzungsmechanismus ein Ausgangsende aufweist, das mit einem Eingangsende des zweiten Untersetzungsmechanismus verbunden ist, und wobei der zweite Untersetzungsmechanismus ein Ausgangsende aufweist, das mit einer Achswelle des Elektrofahrzeugs verbunden ist;
wobei der zweite Untersetzungsmechanismus einen Planetengetriebeuntersetzungsmechanismus umfasst, wobei der Planetengetriebeuntersetzungsmechanismus ein Gehäuse und ein Hohlrad (128), Planetenräder (126) und ein Sonnenrad (125) umfasst, die innerhalb des Gehäuses der Reihe nach von außen nach innen angeordnet sind,
wobei das Sonnenrad (125) mit dem Ausgangsende des ersten Untersetzungsmechanismus verbunden ist;
wobei die Planetenräder (126) jeweils im Eingriff mit dem Sonnenrad (125) und dem Hohlrad (128) sind und über einen Planetenträger mit der Achswelle verbunden sind; und
wobei das Hohlrad (128) mit dem Gehäuse verbunden ist;
wobei der Elektromotor (210, 220) und der Drehzahlverminderer (120, 130) beide auf einem Unterrahmen des Elektrofahrzeugs angeordnet sind, wobei der Unterrahmen über einer stoßdämpfenden Feder des Fahrzeugs angeordnet ist, sodass der Unterrahmen einen Teil der gefederten Masse des Fahrzeugs bildet; wobei der Planetengetriebeuntersetzungsmechanismus ferner eine Hohlradverriegelung (129) umfasst, die am Gehäuse angeordnet ist;
wobei, wenn die Hohlradverriegelung (129) verriegelt ist, das Hohlrad (128) über die Hohlradverriegelung (129) umlaufend am Gehäuse fixiert ist; und
wobei, wenn die Hohlradverriegelung (129) unverriegelt ist, das Hohlrad (128) in der Lage ist, um seine eigene Achse zu rotieren.

2. Elektrofahrzeug nach Anspruch 1, **dadurch gekennzeichnet, dass** der erste Untersetzungsmechanismus ein einstufiger zylindrischer Getriebeuntersetzungsmechanismus ist.

3. Elektrofahrzeug nach Anspruch 2, **dadurch gekennzeichnet, dass** der einstufige zylindrische Getriebeuntersetzungsmechanismus ein erstes Eingangszahnrad (122) und ein erstes Ausgangszahnrad (123) umfasst, die miteinander im Eingriff sind,
wobei das erste Eingangszahnrad (122) in einer Antriebsverbindung mit der Ausgangswelle des Elektromotors ist, und
wobei das erste Ausgangszahnrad (123) in Antriebsverbindung mit dem Eingangsende des zweiten Untersetzungsmechanismus ist.

4. Elektrofahrzeug nach Anspruch 3, **dadurch gekennzeichnet, dass** der einstufige zylindrische Getriebeuntersetzungsmechanismus ferner eine erste Eingangswelle (121) umfasst, die koaxial am ersten Eingangszahnrad (122) fixiert ist, und wobei die erste Eingangswelle (121) koaxial an der Ausgangswelle des Elektromotors fixiert und damit verbunden ist.

5. Elektrofahrzeug nach Anspruch 1, **dadurch gekennzeichnet, dass** die Hohlradverriegelung (129) eine elektrisch gesteuerte Verriegelung ist.

6. Elektrofahrzeug nach Anspruch 1, **dadurch gekennzeichnet, dass** der Planetengetriebeuntersetzungsmechanismus ferner ein dazwischen liegendes Umkehrzahnrad (124) umfasst, das koaxial am Sonnenrad (125) fixiert ist, und wobei das Sonnenrad (125) über das dazwischen liegende Umkehrzahnrad (124) mit dem Ausgangsende des ersten Untersetzungsmechanismus verbunden ist.

## Revendications

1. Véhicule électrique, comprenant un système de transmission de puissance avec des moteurs électriques doubles et des engrenages planétaires, le système de transmission de puissance comprenant deux sous-systèmes de transmission de puissance identiques, dans lequel les deux sous-systèmes de transmission de puissance sont agencés de manière symétrique ;
chacun des deux sous-systèmes de transmission de puissance comprenant un moteur électrique (210, 220) et un réducteur de vitesse (120, 130),
dans lequel le réducteur de vitesse comprend un premier mécanisme de réduction et un second mécanisme de réduction,
le premier mécanisme de réduction a une extrémité d'entrée reliée à un arbre de sortie du moteur électrique, le premier mécanisme de réduction a une extrémité de sortie reliée à une extrémité d'entrée du second mécanisme de réduction, et le second mécanisme de réduction a une extrémité de sortie reliée à un arbre d'essieu du véhicule électrique ;
le second mécanisme de réduction comprend un mécanisme de réduction à engrenage planétaire, le mécanisme de réduction à engrenage planétaire comprend un boîtier, et une couronne (128), des satellites (126) et un planétaire (125) qui sont agencés à l'intérieur du boîtier dans l'ordre de l'extérieur vers l'intérieur,
dans lequel le planétaire (125) est relié à l'extrémité de sortie du premier mécanisme de réduction ;
les satellites (126) sont mis en prise respectivement avec le planétaire (125) et la couronne (128), et sont reliés à l'arbre d'essieu par l'intermédiaire d'un porte-satellites ; et
la couronne (128) est reliée au boîtier ;
moyennant quoi
le moteur électrique (210, 220) et le réducteur de vitesse (120, 130) sont tous les deux agencés sur un sous-châssis du véhicule électrique, dans lequel ledit sous-châssis est positionné au-dessus d'un ressort amortisseur du véhicule de telle sorte que le sous-châssis forme une partie de la masse amortie du véhicule ;
le mécanisme de réduction à engrenage planétaire comprend en outre un verrou de couronne (129) agencé sur le boîtier ;
lorsque le verrou de couronne (129) est verrouillé, la couronne (128) est fixée de manière circonférentielle au boîtier par l'intermédiaire du verrou de couronne (129) ; et
lorsque le verrou de couronne (129) est déverrouillé, la couronne (128) est capable de tourner autour de son propre axe.

2. Véhicule électrique selon la revendication 1, **caractérisé en ce que** le premier mécanisme de réduction est un mécanisme de réduction à engrenage cylindrique mono-étagé.

3. Véhicule électrique selon la revendication 2, **caractérisé en ce que** le mécanisme de réduction à engrenage cylindrique mono-étagé comprend un premier engrenage d'entrée (122) et un premier engrenage de sortie (123) qui sont mis en prise l'un avec l'autre,
dans lequel le premier engrenage d'entrée (122) est en liaison d'entraînement avec l'arbre de sortie du moteur électrique,
et le premier engrenage de sortie (123) est en liaison d'entraînement avec l'extrémité d'entrée du second mécanisme de réduction.

4. Véhicule électrique selon la revendication 3, **caractérisé en ce que** le mécanisme de réduction à engrenage cylindrique mono-étagé comprend en outre un premier arbre d'entrée (121) fixé de manière coaxiale au premier engrenage d'entrée (122), et le premier arbre d'entrée (121) est fixé et relié de manière coaxiale à l'arbre de sortie du moteur électrique.

5. Véhicule électrique selon la revendication 1, **caractérisé en ce que** le verrou de couronne (129) est un verrou à commande électrique.

6. Véhicule électrique selon la revendication 1, **caractérisé en ce que** le mécanisme de réduction à engrenage planétaire comprend en outre un engrenage de marche arrière intermédiaire (124) fixé de manière coaxiale au planétaire (125), et le planétaire (125) est relié à l'extrémité de sortie du premier mécanisme de réduction par l'intermédiaire de l'engrenage de marche arrière intermédiaire (124).
